# EUROPEAN PATENT APPLICATION

(11) **EP 4 800 980 A1**
(43) Date of publication of application: **02.09.2026**
(21) Application number: 25160350.2
(22) Date of filing: 26.02.2025
(51) Int. Cl.: H04L 9/40, H04W 12/088

(54) **METHOD, COMPUTER PROGRAM, AND APPARATUS FOR PROVIDING FIREWALL SERVICES IN A MOBILE COMMUNICATION SYSTEMS**

(71) Applicant: Deutsche Telekom AG, 53113 Bonn (DE)
(72) Inventor: COLOM IKUNO, Josep, 2100 Korneuburg (AT); KABBOUD, Ahmad, 53175 Bonn (DE)
(74) Representative: 2SPL Patentanwälte PartG mbB

(57) **Abstract**

Provided are methods, computer programs, and apparatuses for providing firewall services in a mobile communication system. The method (10) for providing firewall services in a mobile communication system comprises storing (11) user plane information about a user plane data flow of a data service in the mobile communication system and providing (12) the information about the user plane data flow to a firewall entity to enable firewall services to be applied to the user plane of the mobile communication system.

## Description

### Field

The present disclosure relates to methods, computer programs, and apparatuses for providing firewall services in a mobile communication system, more particularly, but not exclusively to a concept for enabling firewall services in a user plane of a mobile communication system.

### Background

A firewall in mobile communication systems acts as a critical security layer designed to monitor and control both incoming and outgoing network traffic according to predetermined security policies. By analyzing data packets and enforcing robust access control rules, the firewall helps protecting mobile devices, cellular networks, and backend infrastructure from malicious activity, unauthorized intrusions, and data breaches. As mobile communication continues to expand in scope - encompassing smartphones, loT (Internet of Things) devices, and sophisticated 5G (5^{th} Generation) networks- the role of a firewall becomes even more pivotal in preventing exploits such as spoofing, malware injections, or distributed denial-of-service attacks. Beyond simply blocking suspicious traffic, modern firewalls can provide deep packet inspection, intelligent threat detection, and real-time monitoring, thereby offering holistic security measures that evolve in tandem with emerging threats and vulnerabilities. This layered security approach, coupled with encryption and other protective mechanisms, ensures that service providers can offer reliable connections while users are safeguarded against potential risks inherent to mobile communications.

### Summary

Examples of the present disclosure are based on the finding that firewall services can be improved by making user plane information about user plane data flows available in a mobile communication system. Such information can be stored centrally and provided to a firewall. The firewall can then use the user plane information to monitor data traffic, i.e. to approve desired data packets and to reject unwanted or critical data packets.

Examples of the present disclosure therefore provide a method for providing firewall services in a mobile communication system. The method comprises storing user plane information about a user plane data flow of a data service in the mobile communication system. The method further comprises providing the information about the user plane data flow to a firewall entity to enable firewall services to be applied to the user plane of the mobile communication system. Thereby, an efficient mechanism is provided to enable firewall services for data services in a mobile communication system.

For example, the user plane information comprises one or more elements of the group of Internet Protocol, IP, flow and/or filter information, header information, an indication whether the user plane data flow is roaming-related, a serving Public Land Mobile Network, PLMN, and/or a Packet Data Unit, PDU, session Identification, ID. The user plane information may constitute efficient information for different types of firewalls, firewalls based on different parameters, respectively. Thereby information enabling efficient operation of the firewall services can be provided in examples. For example, the user plane data flow comprises a user plane data session, especially a packet data unit session in line with the specification of the 3^{rd} Generation Partnership Project (3GPP). In further examples, the storing comprised in the method may include storing the user plane information at a data repository, especially a Unified Data Management, UDM, entity in the mobile communication system. Thereby, the storage of the user plane information can be at a central storage of the mobile communication system and efficiently be made available to firewall entities.

At least in some examples the method is configured to be performed at the data repository, especially the UDM, entity and the providing of the method may comprise sending the user plane information to the firewall entity after reception of a query request from the firewall entity and/or based on a subscription of the firewall entity to being informed about user plane data flows with one or more predefined user plane characteristics (that is, information that characterizes a given user plane). In some examples, the data repository may provide the user plane information when a query or a request is received. In other examples the data repository may proactively send out user plane information if new user plane information is stored to subscribers. A subscription may be based on certain predefined characteristics of the user plane data. Thereby, signaling of the user plane information may be coordinated and efficiently organized. Low latencies may be achieved using the subscription mechanism.

The method may be configured to be performed at the firewall entity. The providing of the user plane information may then include receiving the user plane information at the firewall entity. Such reception may be triggered using different mechanism in examples. The method for the firewall entity may further comprise receiving a user plane data packet at the firewall entity and querying for the information related to the user plane (user plane information) based on the user plane data packet. Hence, the firewall entity may send a query or request to the data repository and receive the user plane information in return. The method may as well comprise receiving the user plane information at the firewall entity based on a subscription to receiving user plane information matching one or more predefined user plane characteristics. Thereby, lower latencies may be achieved as compared to the query mechanism.

For example, the subscription or query may relate to one or more firewall parameters of the group of a firewall identifier, IP flow/filter information, header information, and/or serving PLMN information. Hence, if certain user plane services are established and firewall services are needed, these parameters may be used to trigger the query- or subscription-based information exchange. Moreover, the method may comprise terminating the user plane data flow after a predefined time of inactivity. Therewith an overhead of firewall entities, contexts or active licenses in the mobile communication system may be controlled.

The method for the firewall entity may further comprise using the user plane information for one or more elements of the group of monitoring the user traffic, filtering the user traffic, deriving firewall rules, querying another network element, especially a session management function, SMF, or a user plane function, UPF, for additional user plane information to be used by the firewall entity, and/or sending the received user plane information or information derived from it, especially a firewall rule, to other firewall entities. Hence, examples may enable efficient firewall configuration based on the user plane information.

In other examples the method may be configured to be performed at a SMF and/or UPF of the mobile communication system. The providing of the user plane information may then include registering the user plane information at another network entity, e.g. a firewall entity or a data repository. Examples may enable an efficient registration process for the user plane information, which may originate from network functions such as SMF or UPF.

A further example is a computer program having a program code for performing one of the methods described herein, when the computer program is executed on a computer, a processor, or a programmable hardware component.

Yet another example is an apparatus for a mobile communication system. The apparatus comprises one or more interfaces configured to communicate in the mobile communication system and one or more processing devices configured to perform one of the methods described herein. In further examples the apparatus may be comprised in a firewall entity, a UDM entity, a SMF and/or an UPF of the mobile communication system. Yet another example is a mobile communication system comprising an example of the apparatus.

### Brief description of the Figures

Some examples of apparatuses, methods, and/or computer programs will be described in the following by way of example only, and with reference to the accompanying figures, in which
Fig. 1 shows a flowchart of an example of a method for providing firewall services in a mobile communication system;
Fig. 2 illustrates a block diagram of an example of an apparatus for providing firewall services in a mobile communication system;
Fig. 3 depicts a conventional 5G system at the top and data transmission between UE and a data network at the bottom;
Fig. 4 shows an architecture with a GTP firewall as user plane function;
Fig. 5 illustrates an architecture with a N16 interface synchronization between SEEP and a GTP firewall;
Fig. 6 depicts an architecture with a GTP firewall intercepting the N4 interface;
Fig. 7 shows user plane registration by an AMF in an example;
Fig. 8 illustrates user plane registration by UPF in an example;
Fig. 9 shows query-based user plane information exchange in an example;
Fig. 10 illustrates subscription-based notification in an example;
Fig. 11 depicts mobility from 5G to 4G in an example; and
Fig. 12 shows mobility from 4G to 5G in an example.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In general, a telecommunication system refers to a complex network of devices, technologies, and protocols designed to enable the transmission of information over distances. This system facilitates the exchange of data, voice, video, and other forms of communication between users, typically through wired or wireless means. Key components of a telecommunication system include transmission media (like fiber optics or radio waves), switching and routing devices (such as routers and base stations), and end-user devices (like smartphones, computers, and servers). The system operates through various layers of protocols that ensure reliable, secure, and efficient communication, whether for personal, business, or governmental use. These systems are integral to modern society, supporting services such as mobile communication, internet access, satellite transmission, and broadcasting, enabling global connectivity and access to information.

A network node in a telecommunication system refers to any active, physical or logical device that is responsible for creating, receiving, or transmitting data within a network. These nodes serve as critical points of communication and data transfer, enabling the flow of information across the network. Examples of network nodes include routers, switches, base stations, servers, network functions, access network nodes, and user devices like smartphones and computers. Each node plays a specific role, such as directing data traffic, managing network connections, or handling user requests. In a telecommunications system, network nodes are interconnected, often forming a complex mesh that allows for efficient, scalable communication between multiple devices. These nodes can operate on different layers of the OSI (Open Systems Interconnection) model, from physical infrastructure to application services, as well as in virtualized and/or containerized form, and are essential for maintaining the integrity, speed, and reliability of communication networks.

A mobile communication system is a type of telecommunication infrastructure that allows users to transmit voice, data, and multimedia services wirelessly while on the move. This system operates through a network of interconnected components, including mobile devices (like smartphones and tablets), base stations (NodeBs, eNodeBs, gNodeBs), and core network elements, such as network functions, application functions, facilitating seamless communication across wide geographic areas. Mobile communication systems use radio frequencies to establish connections between mobile devices and base stations, which in turn connect to the broader public or private networks, such as the internet or telephony systems. Modern mobile communication systems are based on technologies like 4G LTE (Long Term Evolution) and 5G, which provide high-speed data transfer, low latency, and improved connectivity. These systems enable various services, including voice calls, text messaging, video streaming, and internet access, making them integral to personal, commercial, and industrial communication in today's interconnected world.

More details can be found in the 3GPP Technical Specifications (TS), e.g. 3GPP TS 23.501 V19.2.1 (2025-01), System Architecture for the 5G System (5GS), and 3GPP TS 23.502 V19.2.0 (2024-12), Procedures for the 5G System.

The systems specified by 3GPP are complex and the full set of specifications extends over thousands of pages. In the following some examples will be detailed that interact with or can be comprised in 3GPP systems. With respect to further details on technical aspects related to these systems beyond those described subsequently, it is referred to the 3GPP specifications.

Firewalls play a critical role in mobile communication systems by providing a robust layer of defense against unauthorized access and malicious activities. In these environments, firewalls help filter and monitor traffic traversing the mobile core network and radio access networks, ensuring that only legitimate data is allowed. They enforce predefined security policies to detect and block threats at various points - such as the Gi interface, where a mobile network meets the public internet- and protect sensitive subscriber information in the process. Moreover, firewalls in mobile networks may utilize deep packet inspection to examine packet contents for signs of intrusion or malware, helping network operators maintain seamless connectivity and service quality. By preventing the spread of malicious code and preventing intrusions, firewalls may ultimately safeguard network infrastructure, protect customer data, and ensure compliance with relevant regulations and standards.

Another important point where firewalls are deployed on telecommunications networks, especially mobile communications networks, is between operators, monitoring and securing roaming traffic. In 4G networks, that interface corresponds to the S8 interface between SGW (Serving Gateway) and PGW (Packet data network Gateway), while in 5G networks, that interface corresponds to the N9 interface between UPFs.

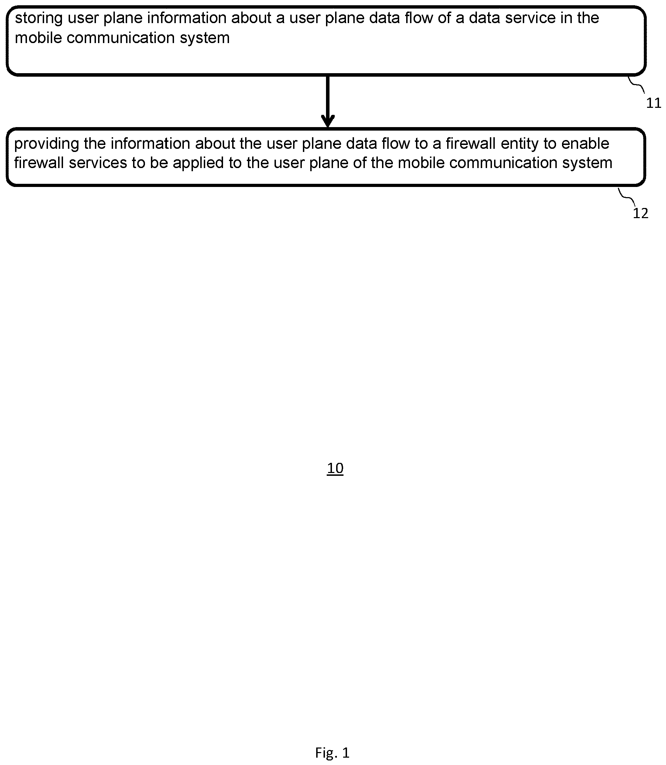

Fig. 1 shows a flowchart of an example of a method 10 for providing firewall services in a mobile communication system. The method 10 comprises storing 11 user plane information about a user plane data flow of a data service in the mobile communication system. The method 10 further comprises providing 12 the information about the user plane data flow to a firewall entity to enable firewall services to be applied to the user plane of the mobile communication system. The firewall is typically located in the data path of the data flow and approves (forwards) data packets of the user plane data flows. Other data packets, which are found to be malicious, unauthorized or illegitimate are blocked.

The firewall or firewall entity typically blocks data packets that deviate from established security policies or exhibit malicious behavior, ensuring that only authorized traffic flows through the network. For instance, packets originating from suspicious or blacklisted IP addresses that are known to distribute malware will be dropped before reaching core network elements. Similarly, the firewall may block packets attempting to communicate over unauthorized ports, such as those associated with known exploits or prohibited services. It also inspects traffic for threats like phishing links, malicious payloads concealed within application data, or anomalies in protocols (e.g., malformed GTP (GPRS (General Packet Radio Service) Tunnelling Protocol) traffic in mobile core networks), and discards any packets suspected of compromising network security. Similarly, a firewall may be configured to allow only traffic that is associated to a given bearer (4G) or a given PDU session (5G). That is, to only allow traffic that is known to pertain to a given subscriber. By filtering out unauthorized data flows and malicious content, the firewall effectively safeguards both the operator's infrastructure and subscribers' personal information.

In the examples described herein the user plane information may comprise one or more elements of the group of Internet Protocol, IP, flow and/or filter information, header information, an indication whether the user plane data flow is roaming-related, a serving Public Land Mobile Network, PLMN, and/or a Packet Data Unit, PDU, session Identification, ID. These are parameters the firewall entity may use for identifying legitimate data packets. For example, the legitimate data packets belonging to the user plane data flow, may be assigned to a specific user plane data session, especially a packet data unit, PDU, session in terms of 3GPP notation.

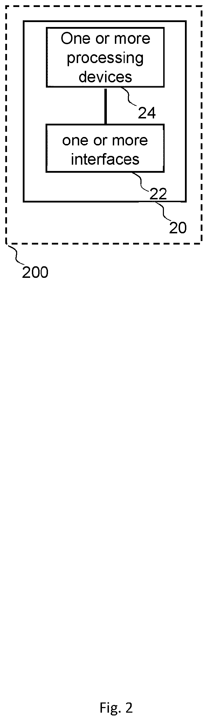

Fig. 2 illustrates a block diagram of an example of an apparatus 20 for providing firewall services in a mobile communication system. The apparatus 20 for the mobile communication system comprises one or more interfaces 22 configured to communicate in the telecommunication system. The one or more interfaces 22 are coupled to one or more processing devices 24. The one or more processing 24 devices are configured to perform one of the methods 10 as described herein. Fig. 2 further illustrates an example of a mobile communication system, a network node or network function 200, which comprises the apparatus 20. 15. For example, the apparatus 20 may be comprised in the mobile communication system, especially in a firewall entity, a UDM entity, a SMF and/or an UPF of the mobile communication system.

As illustrated in Fig. 2, the respective one or more processing devices 24 are coupled to the one or more interfaces 22. The one or more interfaces 22 may correspond and/or be associated to one or more inputs and/or outputs for receiving and/or transmitting information, which may be in digital (bit) values according to a specified code or protocol, within a module, between modules or between modules of different entities. For example, an interface 22 may comprise interface circuitry configured to receive and/or transmit information. In examples an interface 22 may correspond to any means for obtaining, receiving, transmitting or providing analog or digital signals or information, e.g., any connector, contact, pin, register, input port, output port, conductor, lane, logical endpoint, especially based on internet protocol, IP, especially exposing an IP port and/or an API (Application Programming Interface); etc., as well as any abstraction thereof, especially based on virtualization, containerization, service abstraction, proxying, load-balancing, network address translation (NAT), cloud computing and/or serverless computing; which allows providing or obtaining a signal or information. An interface 22 may be configured to communicate (transmit, receive, or both) in a wireless or wireline manner and it may be configured to communicate, i.e., transmit and/or receive signals, information with further internal or external components. The one or more interfaces 22 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. Moreover, the one or more interfaces may be APIs in some examples. Moreover, the one or more interfaces may be logical transmission channels within a processing device or between processing devices, especially a signaling channel.

The one or more processing devices 24 may be implemented using one or more processing units, one or more circuitries, any means for processing, such as a processor, a computer or a programmable hardware component being operable with accordingly adapted software. In other words, the described function of the one or more processing devices 24 may as well be implemented in software, which is then executed on one or more programmable hardware components. Such hardware components may comprise a general-purpose processor, a Digital Signal Processor (DSP), a micro-controller, etc. and/or an abstraction thereof.

In examples a network entity or node may be any network node in a Radio Access Network (RAN), a Core Network (CN), or any node of any telecommunications system. For example, a network entity may generate cells of a cellular system. A network entity may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A network entity can be a wireless interface of a wired network, which enables transmission and reception of radio signals to a communication device, e.g. a base station or access point. Such a radio signal may comply with radio signals as, for example, standardized by 3GPP or, generally, in line with one or more of the above listed systems. Thus, a network entity may be a base station and may correspond to, a NodeB, an eNodeB, an ngNB, a gNB, a BTS (Base Transceiver Station), an access point, all of which may be implemented in a satellite, plane, etc.

The communication system may hence be cellular. The term cell refers to a coverage area of radio services provided by a transmission point, a remote unit, a remote head, a remote radio head, communication device, network entity or a NodeB, an eNodeB, an ngNB, a gNB, a beam, a satellite, respectively. In general, the UE may be a communication device or network node that is capable of communicating wirelessly. In particular, however, the communication device may be a mobile communication device, e.g., a communication device that may be suitable for being carried around by a user. For example, the communication device may be a User Terminal (UT) or User Equipment (UE) within the meaning of the respective communication standards being used for mobile communication. For example, the communication device may be a mobile phone, such as a smartphone, or another type of mobile communication device, such as a computer, a smartwatch, a laptop computer, a tablet computer, etc. The communication device may be in a vehicle, a car, a bus, a truck, a construction and/or agricultural machinery, a train, an airplane, a boat, a ship, a cruise ship, an Internet of Things (IoT) device, a logistics application, etc.

In general, the (mobile) telecommunication system may, for example, correspond to one of the Third Generation Partnership Project (3GPP)-standardized mobile communication networks, where the term mobile communication system is used synonymously to mobile communication network. The mobile communication system may correspond to, for example, a 6th Generation system (6G), a 5th Generation system (5G), a New Radio (NR) system, a Long-Term Evolution (LTE, 4G), an LTE-Advanced (LTE-A), High Speed Packet Access (HSPA), a Universal Mobile Tele-communication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc. Further network entities or nodes are those comprised in a core network of the mobile communication system 300, as will be outlined in more details subsequently.

Examples may provide a method for enhanced support of user plane security especially for roaming in mobile networks. Support of GTP-U (GTP-User plane) firewall functionality is strongly needed by mobile operators. It enables operators to keep control over what User Plane (UP) is let into an operator's network. Only UP for which a valid data session is available should be allowed.

GTP-U is commonly used as a UP-transport protocol and firewalls have been typically used to fulfill this functionality. These firewalls are typically deployed in a transparent fashion. That is, in a way not visible to the mobile network's Core Network (CN). In 4G networks, the firewall sits on the path of the S8 traffic (both CP and UP), but its endpoints or presence are not known to the core network(s) involved in the communication. However, with enhancements introduced in 5G, especially that of the Inter PLMN User Plane Security (IPUPS), it is challenging to keep providing such a functionality without enhancements in the CN, for which a solution should be provided. Furthermore, it should be possible to define a flexible and future-proof way for such enhancements to be defined (and very importantly, with impact only in the H-PLMN (Home-PLMN)). Impact on the V-PLMN is not a reliable solution, as the V-PLMN is typically out of the sphere of influence of the H-PLMN.

At least some examples may provide enhancements to the 5G system so that UP firewall functionality, especially GTP-U firewalls, can be efficiently and reliably implemented.

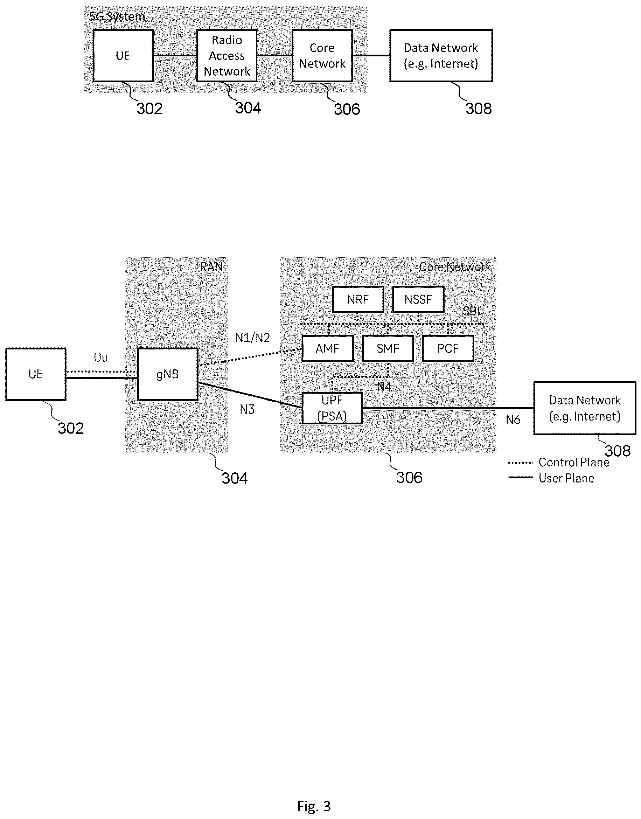

In the following, the general architecture of mobile networks will be described. The current paradigm divides the mobile network in two main parts: Access Network (AN) and Core Network (CN). Fig. 3 depicts a conventional 5G system at the top and data transmission between UE 302 and a data network 308 at the bottom. Fig. 3 shows a UE 302 that connects via RAN 304 and CN 306 to a data network 308, e.g. the internet. The objective is to provide the UE with connectivity towards the data network (DN) 308. Going in more detail, the UE302 communicates with the RAN 304 via a radio interface, which is used for conveying both signaling information and data traffic. Even if there is a logical separation (logical channels), for obvious reasons both types of data end up being transmitted over the same physical medium.

Between the RAN and the Core Network (CN) 306, signaling information and user data are separated in different interfaces: N1/N2 and N3 in the 5G case, the former running on a SCTP/NG-AP/NAS protocol stack (Stream Control Transmission Protocol / Next Generation Application Protocol / None Access Stratum)) and the latter running on a UDP/GTPU-U protocol stack (User Datagram Protocol / GPRS (General Packet Radio Service) Tunneling Protocol - User Plane). Fig. 3 shows at the bottom the UE 302 communicating with a gNB of the RAN 304 using control plane (dotted line) and user plane (solid line) data. The gNB of the RAN 304 connects via the N3 interface to the user plane function (UPF) in the CN 306 and then via N6 to the DN 308. In the control plane the gNB connects via N1/N2 to the AMF (Access and Mobility Management Function) in the CN 306. The AMF connects via N4 to the Session Management Function (SMF) and via Service-Based Interfaces (SBI) to other network functions like Policy Control Function (PCF), Network Repository Function (NRF) and Network Slice Selection Function (NSSF).

In order to establish a data connection enabling a UE 302 to communicate with a DN 308, a PDU (Packet Data Unit) session es required. A PDU session is a logical data transport channel terminated at the CN 306 that provides connectivity to a DN 308. The termination point of a given PDU session (UPF in Fig. 3 and how it works in 5G) is termed PDU Session Anchor (PSA).

Roaming in mobile communication networks allows subscribers to use voice, data, and other services while traveling outside the geographical coverage area of their home network, seam-lessly connecting them to visited networks through established inter-operator agreements. In 3GPP standards, roaming is enabled by common technical specifications and signaling protocols that ensure different PLMNs can interact and authenticate subscribers from other PLMNs securely. These specifications describe how user equipment (UE) selects visited networks (visited PLMNs, V-PLMNs), manages subscriber identities like the International Mobile Subscriber Identity (IMSI), and exchanges billing and usage information between the home and visited networks. Security functions are also defined to protect critical subscriber data as it traverses multiple networks, which is essential for preserving user privacy and preventing fraud. By standardizing procedures for mobility management, authentication, authorization, and accounting, 3GPP facilitates a smooth customer experience when crossing network borders. Operators worldwide rely on this framework to deliver consistent service quality, handle inter-carrier billing, and maintain subscriber trust, illustrating the critical role of 3GPP in shaping the global roaming landscape.

For roaming, home-routed is the setup typically preferred by operators. Home-routed has the following advantages from (home) operator perspective:
- The home PLMN has visibility and control over the user's UP: a UPF (UP function) controlled by the H-PLMN (Home-PLMN) is on the data path.
- The UP is transported over the home PLMN, which is also necessary for Lawful Interception (LI).

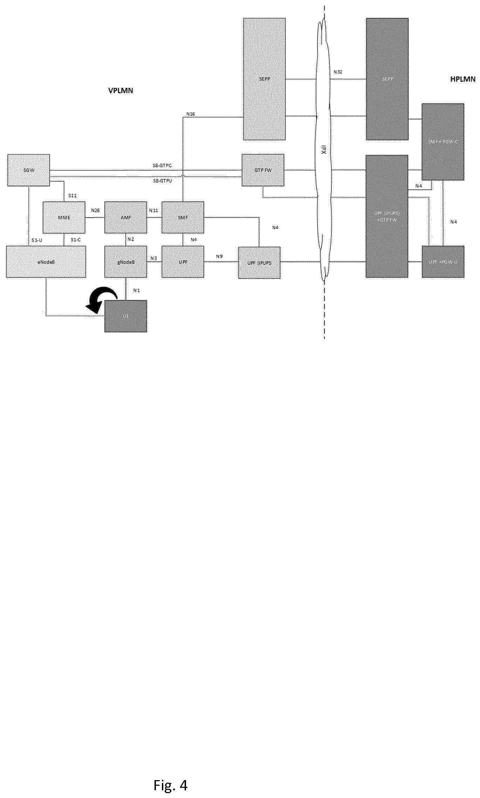

Further details on the home-routed architecture can be found in TS 23.501 V19.2.1, Fig. 4.2.4-3 "Roaming 5G System architecture - home routed scenario in service-based interface representation" and the corresponding description.

In order for a PDU session to be established in a home-routed scenario, the V-PLMN and the H-PLMN need to exchange information regarding the PDU session so that the UP can be rerouted. The UP is routed via a N9 GTP-U tunnel connecting a UPF in the V-PLMN and a UPF in the H-PLMN.

The communication channel (interface) between the V-SMF and the H-SMF is termed N16 and is depicted in Fig. 4.2.4-6 "Roaming 5G System architecture - home routed scenario in reference point representation" of TS 23.501 V19.2.1. A further description can be found in step 6 of the procedure flow described in TS 23.502 V19.2.0, section 4.3.2.2.2, "Home-routed Roaming", e.g. roaming architecture for home-routed scenario. Further details on the PDU session establishment in home-routed scenario can be found in TS 23.502 V 19.2.0, clause 4.3.2.2.2. One relevant step is that of 12c. The H-SMF registers itself in the UDM as "responsible" for the PDU session, cf. also step 16c in clause 4.3.2.2.1 of TS 23.502 V19.2.0.

For the mandatory IE "Serving Node PLMN ID", the definition is found in TS 29.503, V19.1.0, clause 6.2.6.2.4, Table 6.2.6.2.4-1. It corresponds to the H-PLMN ID (plmnid parameter):
Serving node PLMN identity.
For a HR (Home Routed) PDU session, this IE shall include the PLMN ID of the home network of the UE. For a LBO (Local Breakout) PDU session, this IE shall include the PLMN ID of the serving network where the UE is registered from.

Details on information registered by the SMF at UDM can be found in TS 23.502 V19.2.0, clause 5.2.3.1. Information is stored by the SMF at the UDM regarding a PDU Session it is responsible for.

For the mobility cases between 4G and 5G (in the H-PLMN, a PGW-U (Packet data network Gateway) and UPF is used, otherwise interworking is not possible), the following applies:
- 5GS to EPS (Evolved Packet System) handover using N26 interface: The SMF registration in the UDM remains (the same SMF (actually SMF and PGW-C (PGW-Control plane)) remains. See clause 4.11.1.2.1 of TS 23.502 V19.2.0.
- EPS to 5GS handover using N26 interface: In step 10 of clause 4.11.1.2.2.3 of TS 23.502 V 19.2.0. If the SMF has not yet registered for this PDU Session ID, then the SMF registers with the UDM using Nudm_UECM_Registration (SUPI, DNN, PDU Session ID) for a given PDU Session as in step 4 of PDU Session Establishment Procedure in clause 4.3.2.
- Similar case for idle mode: 5G->EPS the SMF registration in UDM remains, EPS->5G the SMF registration is performed if it does not exist.

Currently, 5G roaming is not yet commercially rolled out in a significant scale. Most roaming goes via 4G. One important feature of roaming in 4G systems that is outside of 3GPP scope is that of the GTP-U firewall. The GTP-U firewall's goal is to allow only data traffic that is linked to an active data session and to reject/block other traffic. It also often terminates data sessions after a given inactivity period. In order to accomplish this, the firewall typically "intercepts" the S8 interface (between S-GW (Serving Gateway) in V-PLMN and PGW (in HPLMN)), which is unencrypted, and
- learns of all of the active EPS bearers (same concept as a PDU session but for 4G), and
- impersonates the PGW in the H-PLMN and the S-GW in the V-PLMN and terminates sessions after a given inactivity period.

A new addition to the 5G architecture has been the IPUPS (Inter PLMN User Plane Security). While not a fully-fledged GTP-U firewall, it allows for checking UP validity. Further details can be found in clause 4.2.4 and Fig. 4.2.4-9 of TS 23.501 V 19.2.1. The IPUPS standardized functionality is that of forwarding/dropping traffic according to the packet forwarding rules a SMF instructs it to apply. It thus fulfills the functionality of allowing traffic associated with a PDU session. An important characteristic of a IPUPS is that it relies on explicit N9 endpoints. That is, the IPUPS terminates N9 GPT-U, which are setup and explicitly signaled via CP.

Concurrent support of 4G and 5G roaming seems necessary for all operators. While the 5G roaming architecture has many benefits, especially regarding security, a gradual rollout is the reality. It would be possible to provide a workable solution to support firewall capabilities in the following ways. For example, intermediate UPF can be used as IPUPS. 3GPP defines a specialized functionality for a UPF, which is capable of checking whether the UP should be allowed into the network.

Fig. 4 shows an architecture with a GTP firewall (GTP FW) as user plane function UPF (IUPS). Fig 4 illustrates the VPLMN on the left and the HPLMN on the right with an IP exchange network (IPX) in between. The PLMNs communicate via N32 between their SEPPs (Security Edge Protection Proxy), which tunnels N16 (between SMFs). On the HPLMN side the UPF communicates with SGW and the GTP FW, i.e. the 4G components, on the VPLMN side.

This variant does allow for 5G UP to be checked for integrity (i.e. whether it should be allowed into the operator's network). The Integrity Protection User Plane Function (IPUPS) is configured by the SMF to let certain traffic in, while other traffic is not let in. Thus, the SMF configures the IPUPS with information regarding active (i.e. valid) PDU sessions.

This variant has the inconvenient(s) of:
- Requiring SMF support.
- Explicit communication between SMF and IPUPS UPF.
- IPUPS only exists in the "5G world". The 4G side needs to rely on other means (no N4 interface).
- Lots of GTP-U tunnels (and their related endpoints) need to be setup (and maintained).

The GTP FW needs to implement the whole N4 interface specification and the interface toward the NRF (Network Repository Function). Two elements are doing similar functionality (GTP FW and SEPP) for the 5G network.

Another option is N16 Interface synchronization between SEPP GTP-U Firewall. An interface can be implemented, where the SEPP forwards the information exchanged between the V-SMF and H-SMF (it contains UP endpoint information) to the firewall (no IPUPS needed), such that the firewall is aware of the N16 (interface between the V- and H- SMFs) information.

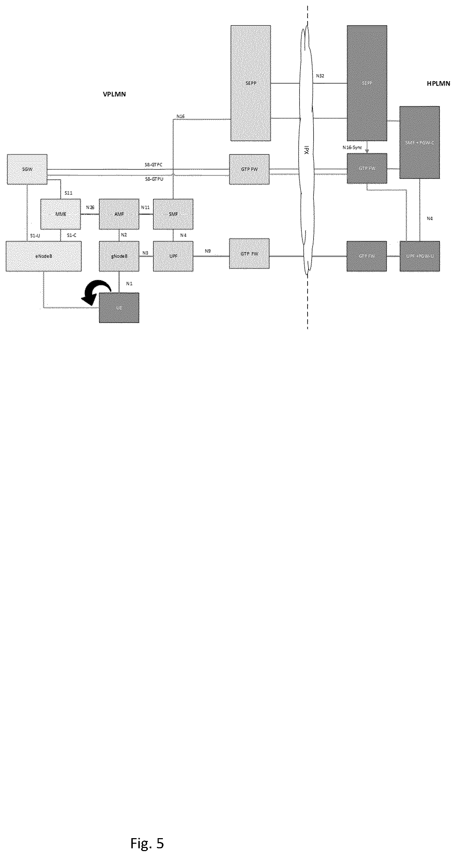

Fig. 5 illustrates an architecture with a N16 interface synchronization between SEEP and a GTP firewall.

This variant has the inconvenient(s) of:
- SEPP needs fixed configuration regarding serving SMF(s).
- The N16 information is forwarded (this is a form of CP mirroring / vTap /probing) from the SEPP to the firewall in a yet unspecified way. This requires not only mirroring of N16 requests but also N16 responses, as N9 tunnel information is sent for both directions during tunnel setup.
- The SEPP is not actually designed to forward information to NFs unrelated to the traffic. Rather, it is designed to provide a security layer to the roaming traffic. This would be similar to designing an IPSec Gateway to duplicate traffic and send it to another endpoint.

- Since the message actually comes from a V-PLMN, it would require inter-op testing with external network elements and troubleshooting may include the analysis of such third-party traffic.
- N16 information contains (much) more information than what the firewall needs. Among other important, unrelated parameters, this information includes the SUPI (Subscription Permanent Identifier), which can be directly mapped to a user.

Although this option may be easy to implement as the SEPP only mirrors the N16 messages, the GTP FW is not able to apply the session policy on the 5G sessions.

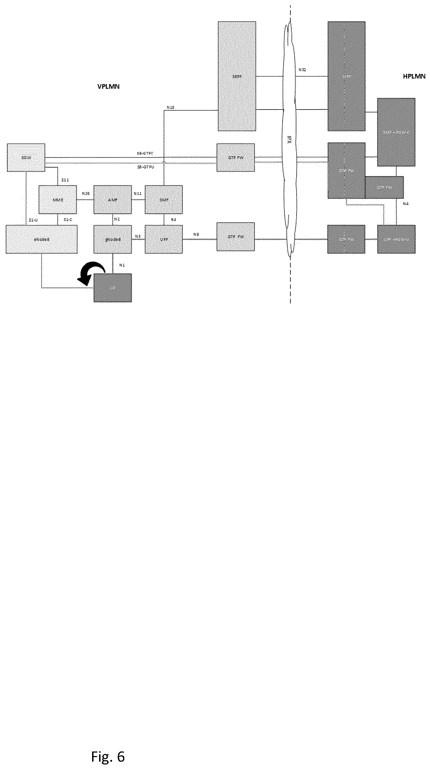

Another option is that GTP FW intercepts the N4 interface. In this alternative one could trace/duplicate/intercept the information in the N4 interface that links the GTP-U tunnel endpoints (N3, N6, N9) and TEID (Tunnel Endpoint ID) information, such that the UP firewall can get this information. Fig. 6 depicts an architecture with a GTP firewall intercepting the N4 interface.

This variant has the inconvenient(s) of:
- N4 is a binary protocol, and the target would be to replace it when 6G comes, so logic would need to be (completely) re-implemented if 6G is introduced.
- The N4 interface is one of the less interoperable of all. The N4 interface typically contains many proprietary (vendor-specific) elements, which may or may not be relevant for the firewall, which complicates interoperability testing and deployment.

As the N4 interface is not encrypted, all the N4 interface traffic is routed through the GTP FW to allow the GTP FW to intercept the N4 and build the needed information for inter-RAT handover in VPLMN. In case an operator would choose to secure the N4 interface, the solution would typically involve IPSec tunnels, which would render this solution even more difficult to deploy.

Examples may provide the UP firewall with up-to-date information regarding valid UP. This can be achieved by:
- UDM is enhanced such that UP information (e.g. TEID, GTP-U endpoints) is stored in the UDM associated with a given data session. Hence, the storing 11 of the above method 10 may comprise storing the user plane information at a data repository, especially a UDM, entity in the mobile communication system.
- SMF (or UPF) are enhanced to register UP information to the UDM. The method 10, which is also carried out at the SMF is then configured to be performed at a SMF and/or UPF of the mobile communication system. The providing 12 of the user plane information comprises registering the user plane information at another network entity.
- UDM is enhanced such that
   o data session parameters can be queried for validity by a UP firewall, or
   o a UP firewall can subscribe to be notified of home-routed PDU session information.

   The method 10 may then be configured to be performed at the data repository, especially the UDM, entity. The providing 12 then comprises sending the user plane information to the firewall entity after reception of a query request from the firewall entity and/or based on a subscription of the firewall entity to being informed about user plane data flows with one or more predefined user plane characteristics. The method 10 is then also configured to be performed at the firewall entity. The providing 12 then comprises receiving the user plane information at the firewall entity.
   The method 10 for the firewall entity can then comprise receiving a user plane data packet at the firewall entity and querying for the information related to the user plane based on the user plane data packet at the data repository, e.g. UDM. Additionally or alternatively, the receiving of the user plane information at the firewall entity may be based on a subscription to receiving user plane information matching one or more predefined user plane characteristics.
- Enhancements such that a UP firewall can terminate a data session (e.g. due to inactivity). The method 10 for the firewall entity then comprises terminating the user plane data flow after a predefined time of inactivity.
- The GTP-U Firewall can :
   o Query the UDM (or UDR) regarding a given TEID, or
   o receive up-to-date information of home-routed data sessions via subscribe/notify.

In terms of the 3GPP specification, the firewall functionality itself is not defined by the specification. However, the firewall acts as an Application Function (AF), which communicates in a standardized fashion with the CN (elements) and performs a functionality that is out of 3GPP scope (UP firewall). Thus, the example solutions presented can also be seen as that of an AF (trusted or untrusted) interacting with a CN in the ways described.

In examples solutions may be designed to cover at least the following use cases:
- 5G
- Mobility from 5G to 4G
- Mobility from 4G to 5G

In the following, details on the registration of user plane information at the UDM as example for a data repository will be outlined. Examples may include UP information in the UDM. The SMF registers SM-related information in the UDM, and this information can then be used by the firewall.

In example, the method 10 can be used at the SMF. An easy way is to enhance the SMF registration in the UDM to include UP-related data, such as:
a. IP flow/filter information (related to the GTP-U flow, i.e. the "outer" flow), not the payload containing UE UP packets), especially information included in the IP header of the transmitted packets e.g. 4-tuple, 5-tuple GTP-U endpoint information, IP source and/or destination address or range (e.g. in IP range, subnet), protocol type, IP version.
b. Header information, especially information included in or equivalent to GTP-U header extensions, e.g. information associated or related to a tunnel identifier, such as TEID, 5QI (5G QoS (Quality of Service) Identifier, it is equivalent to QCI (QoS Class Identifier) in LTE), QoS flow information, PDU session ID. It should be noted that the PDU session ID can be used by the firewall, but since this identifier is generated by the UE, it won't be enough by itself for proper filtering and should be used together with other identifiers such as the TEID.
c. Indication whether UP is roaming-related (e.g. home-routed).
d. Serving PLMN (indirectly indicates whether the PDU session is roaming-related). The serving PLMN can be used for enabling query/subscribe/notify flows.

The firewall entity may hence use the user plane information for one or more elements of the group of monitoring the user traffic, filtering the user traffic, deriving firewall rules, querying another network element, especially a SMF or a UPF, for additional user plane information to be used by the firewall entity, and/or for sending the received user plane information or information derived from it, especially a firewall rule, to other firewall entities.

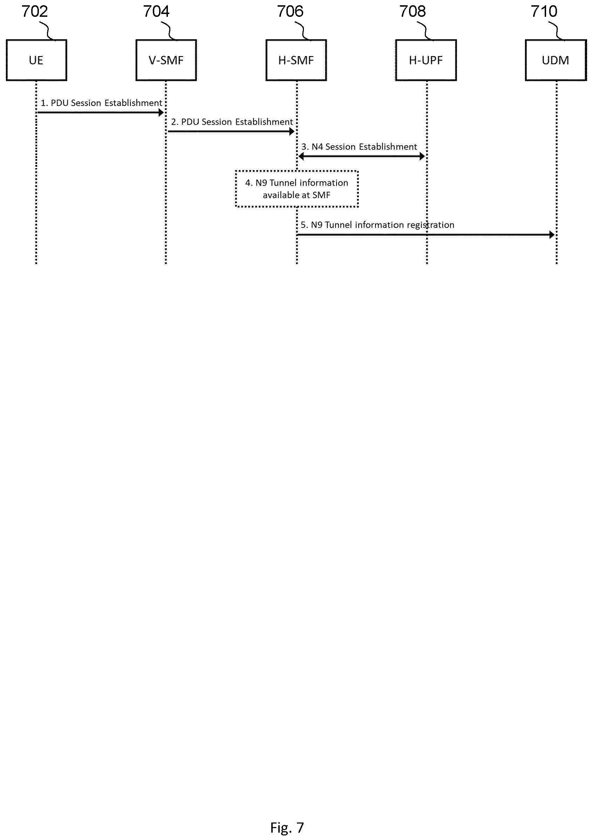

Fig. 7 shows user plane registration by an AMF in an example. Fig. 7 shows a UE 702 at the left initiating a PDU Session Establishment procedure with a V-SMF 704, which forwards the PDU Session Establishment to H-SMF 706. The H-SMF 706 initiates an N4 Session Establishment procedure with H-UPF 708. N9 tunnel information available at the H-SMF is stored. The H-SMF 706 the registers the N9 Tunnel information at the UDM 710.

In this example, as part of PDU session establishment (5G procedure), the UP information is registered to the UDM 710. The example considers:
- Additional parameters to the existing SMF registration in UDM 710.
- Update of existing SMF registration in UDM 710.
- Separate message such that the newly-added UP information is associated to an existing SMF registration in UDM 710.

At least in some examples registration is performed via UPF. Additionally or alternatively, it can also be considered that the UPF registers (or updates) the registration in the UDM with UP information.

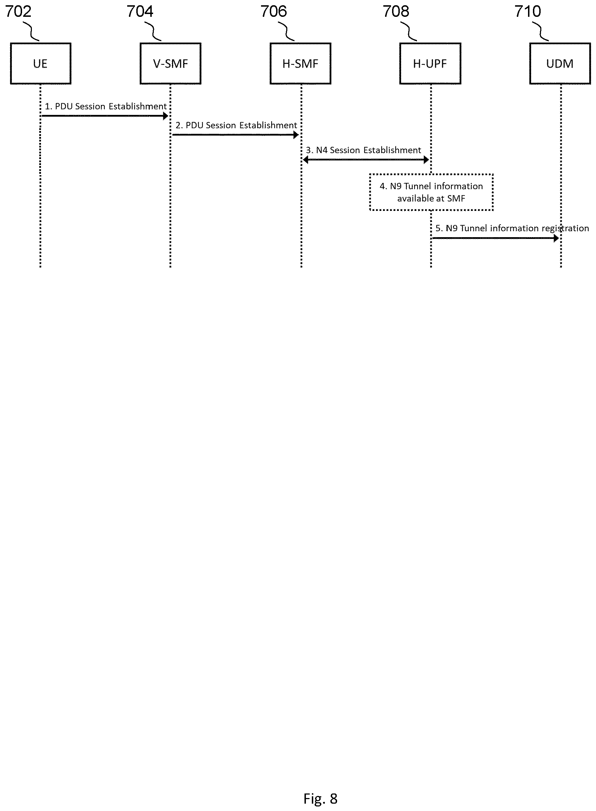

Fig. 8 illustrates user plane registration by UPF in an example. The same entities as in Fig. 7 are shown. In this case, the UP information is sent from the UPF 708 to the UDM 710, which is a valid possible variant of the example shown in Fig. 7.

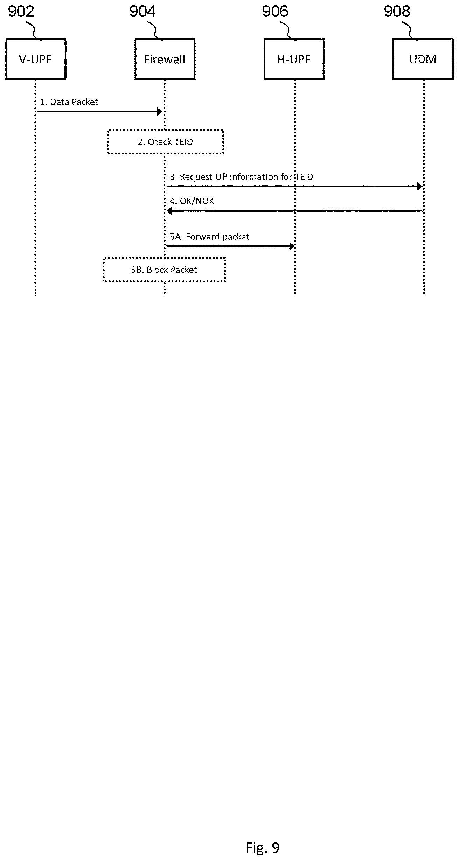

In some examples a query is performed by the UP firewall. This may be considered a reactive method 10 by which the UP Firewall can receive the UP information such that it can know whether certain traffic should be let in or not. Fig. 9 shows query-based user plane information exchange in an example. As shown in Fig. 9 V-UPF 902 sends a data packet to the firewall entity 904, which checks the TEID. It then sends a request for UP information for TEID to UDM 908, which response with an OK/NOK (not OK). Based on this information the firewall entity 904 forwards the data packet to the H-UPF or blocks the data packet.

Additionally or alternatively, the firewall may perform the query based on any, or all UP-related data, such as including IP information or other header information.

When receiving a data packet, the header information is considered (e.g. TEID, although other header information can also be considered), which results in the firewall 904 performing a query to the UDM 908 for matching UP information. If the UDM 908 responds with a valid match, the firewall 904 can let through (approve) the UP. Otherwise, the UP can be blocked.

Considered answers from the UDM are:
- Matching UP information, which the firewall can then evaluate,
- match/no match response, which limits the amount of information available to the firewall.

Considered behavior until a reply from the UDM is received are:
- Let UP through,
- discard UP.

Additionally or alternatively, other behaviors that can be combined with the considered behaviors are:
- Monitor and/or log traffic,
- notify.

One advantage of this method is that the firewall can obtain the full tunnel information in one step. If the information is obtained from the N16 interface (e.g. via probing), the firewall needs to keep track of two procedure messages. While the V-CN-Tunnel-Info is sent on step 6 of the PDU session establishment, the H-CN-Tunnel-Info is sent later on step 13 of the procedure. Hence, the firewall needs to understand the procedure structure and keep state information regarding the ongoing procedure to be able to extract this information.

With an example as disclosed herein, the firewall can get the information in a single step, without needing to track any procedure information. It thus allows a more stateless operation of the firewall, as the needed information is retrieved in a single, atomic operation. In terms of SMF complexity, it is a clean solution and a low-impact solution, in the sense that the information can be sent to the UDM in a single step using an existing interaction (SMF-UDM registration).

In a further example, a subscribe-notify method 10 is used. In the query-based approach, while only information related to active data flows is retrieved, it has the disadvantage of requiring a wait time until the UDM responds. In order to remove this disadvantage and reduce latency, a subscribe-notify method 10 is considered at least in some examples.

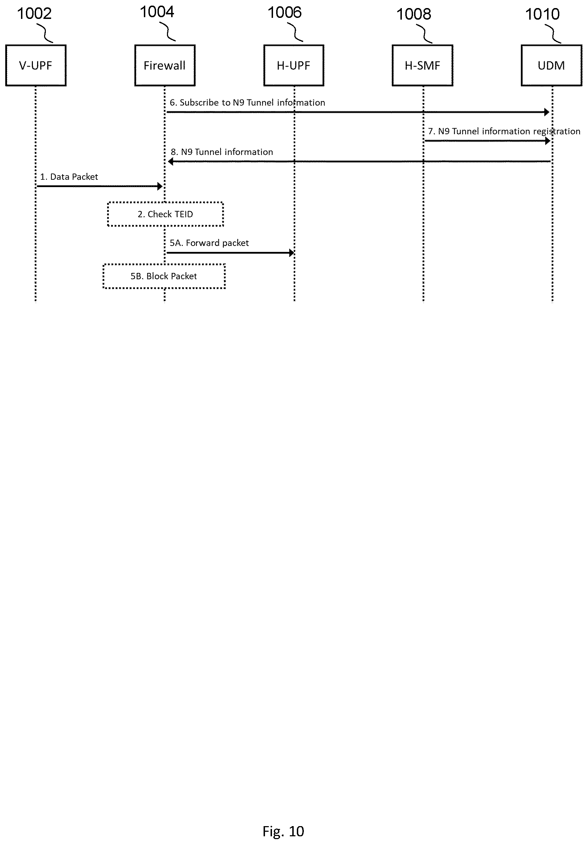

Fig. 10 illustrates subscription-based notification in an example. In this example the firewall 1004 subscribes to N9 tunnel information at the UDM 1010. The H-SMF 1008 provides or registers the N9 tunnel information at the UDM 1010. Because of the subscription the UDM 1010 provides the N9 tunnel information from the H-SMF 1008 to the firewall 1004. When the firewall 1004 receives a data packet from the V-UPF1002 it checks the TEID and then either forwards the data packet to the H-UPF 1006 or blocks the data packet. In general, the subscription or query may relate to one or more firewall parameters of the group of a firewall identifier, IP flow/filter information, header information, and/or serving PLMN information.

The firewall 1004 can subscribe to UP information regarding specific types of traffic, e.g.
- Roaming traffic.
- Traffic from specific (serving) PLMNs.
- Traffic from specific (ranges) of SUPls/user identifiers.

This information can thus be provided by the UDM 1010 as soon as it is available (e.g. SMF registers a matching PDU session) and the UP information can thus be made available to the firewall.

A combination of subscribe-notify for fast response and query/response for unknown traffic can also be used, such that the best of both methods can be used/selected.

One common restriction with UP firewalls is that they are licensed on a per-session basis. That is, the amount of UP (GTP-U) sessions that can be monitored is limited. For that, the following parameters that the firewall can use to only receive information regarding specific UP flows (additional parameters in the subscribe request or query request) can be considered:
- firewall identifier: the UDM could be configured to send different information to different firewall instances.
- IP flow/filter information: a given firewall instance may be deployed to filter only traffic of certain subnets (e.g. incoming traffic from certain IPX providers or PLMNs), not the whole PLMN.
- Header information, e.g. TEID, 5QI, QoS flow information: a given firewall instance may be deployed to filter only high-priority traffic.
- Serving PLMN: a given firewall instance may be deployed to filter only traffic from specific PLMN IDs/countries.

The target being that each firewall instance only receives UP data (which the firewall will use to derive firewall rules) that it needs, and not the full set. Thus, achieving a more efficient use of firewall session license.

In the following mobility from 5G to 4G will be considered. In this case, the examples may be enhanced, such that the existing SMF registration is updated with the new UP information (the UP now comes from the V-PLMN's 4G system).

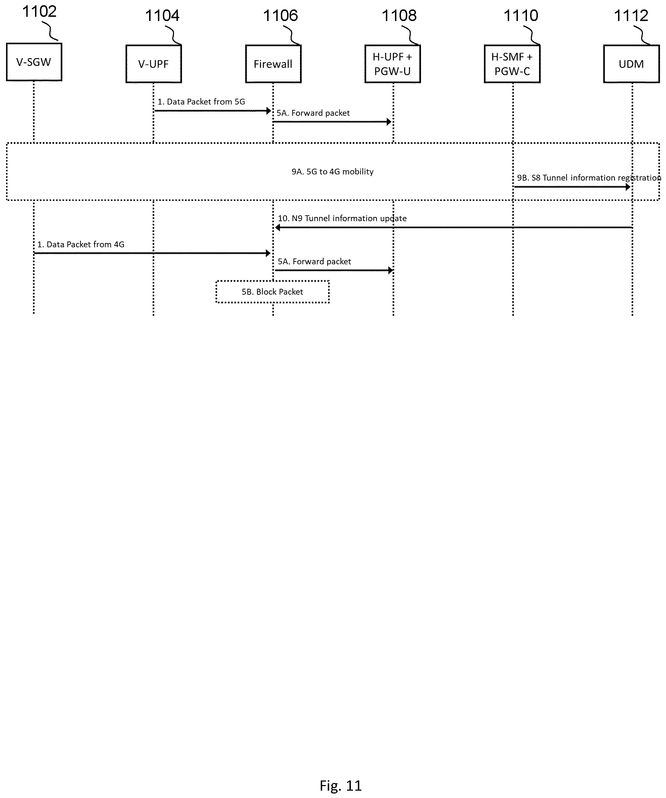

Fig. 11 depicts mobility from 5G to 4G in an example. In Fig. 11 the firewall entity 1106 receives a data packet from 5G V-UPF 1104 and forwards it to H-UPF and PGW-U 1108. For handover from 5G to 4G the H-SMF and PGW-C 1110 provides or registers S8 tunnel information at the UDM 1112. The UDM 1112 can then send an N9 Tunnel information update to the firewall 1106. If a data packet is then received from 4G V-SGW 1102 at the firewall 1106 it can be forwarded to H-UPF and PGW-C 1110, it can be blocked respectively.

As part of the 5G-to-4G mobility procedure, a new interaction with the UDM 1112 is introduced, such that the N9 tunnel information is updated (removed) to reflect the new information tunnel information, which is now S8-related (from UP perspective basically the same). The information is then conveyed to the UP firewall 1106 in the same way as already described (query-based or subscribe-notify).

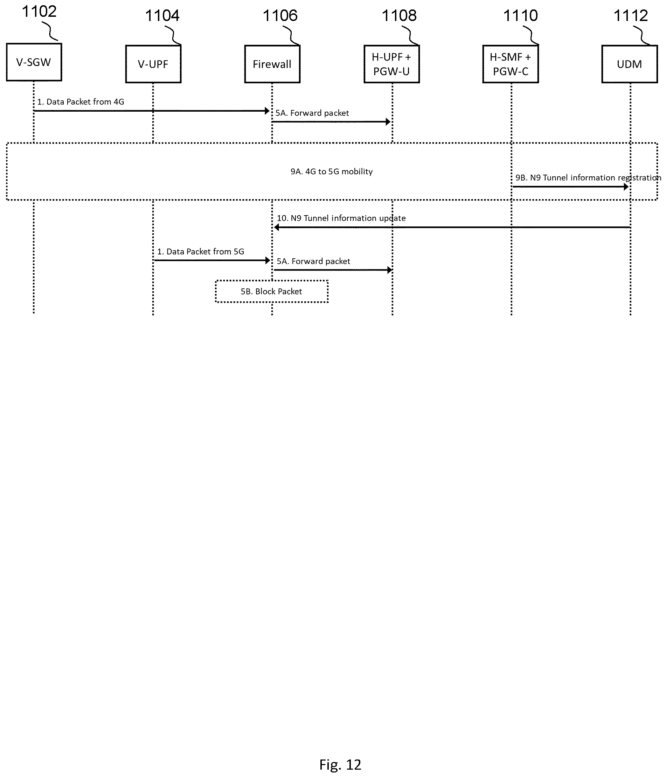

In the following mobility from 4G to 5G is considered. In this case, the example can be applied as is. Fig. 12 shows mobility from 4G to 5G in an example. Fig. 12 shows the same entities as Fig. 11. In Fig. 12 the firewall entity 1106 receives a data packet from 4G V-SGW 1102 and forwards it to H-UPF and PGW-U 1108. For handover from 4G to 5G the H-SMF and PGW-C 1110 provides or registers N9 tunnel information at the UDM 1112. The UDM 1112 can then send an N9 Tunnel information update to the firewall 1106. If a data packet is then received from 5G V-UPF 1104 at the firewall 1106 it can be forwarded to H-UPF and PGW-C 1110, it can be blocked respectively.

As part of the 4G-to-5G mobility procedure, the SMF and PGW-C 1110 registers at the UDM 1112. The same step 5 of the registration flow applies as step 9B, which is now part of the 4G to 5G mobility procedure. The S8 tunnel information (if available) can thus be removed. The information is then conveyed to the UP firewall in the same way as already described (query-based or subscribe-notify).

For the case the V-PLMN uses a combo CN, that is, a CN supporting simultaneously 4G and 5G, if the tunnel endpoints do not change (e.g. SGW-U + UPF on the VPLMN), the UP need not be updated, and firewall rules need not be updated, hence efficiently reducing the amount of signaling between the CN and the firewall.

Examples may enable a restriction of information access. Compared to the other alternatives based on current state of the art, the examples allow restricting the information the GTP-U firewall has access to. The firewall can be provided with the minimum set of information required for performing its functionality, while the rest of the information can be omitted.

The following information can be omitted:
- UP rules applied to the flow (accessible if we forward the N4 messages).
- All of the session information (accessible if we forward the N16 message).
- Subscriber identifiers (accessible if we forward the N16 message).

It is thus advantageously possible to allow firewall operation while only providing the necessary information, thus improving privacy and security by restricting UP information to what is necessary for firewall operation.

Furthermore, OAuth2-based authorization can be used as part of available the standard SBI (Service Based Interface) toolset. Thus, a specific API (Application Programming Interface) can be designed for the API queries (or subscribe/notify) such that the firewall only receives the necessary information.

Examples may enable an integration of a UP Firewall in a 3GPP CN. In terms of "3GPP nomenclature", a UP firewall can be considered a "Trusted Application Function (AF)", which would then be able to interact with the APIs of the NFs. Examples may only require minimal addition of information to the UDM. In terms of 3GPP changes, it may be possible that it is not agreeable to add such information to the UDM but rather, the UDM is used to locate a SMF that can be queried for this information.

In order to support this use case, examples may consider that the UP information received by the firewall can be used to find and query another network element, especially SMF or UPF, for additional User Plane information to be used by the UP firewall.

Example:
- Firewall subscribes to roaming-related PDU sessions.
- SMF registers PDU session with "roaming" indication. The indication may also include the type of roaming, such as "home-routed"
- Firewall is notified including reference to SMF that registered the PDU session.
- Firewall queries the SMF.

Examples may enable sharing of information between firewall instances. In order to support a hot-hot redundancy scheme, examples may consider that the UP information or the derived firewall rules can be propagated between firewall instances, such that only a single notification can be used to update multiple firewall instances.

In the following aspects covered by examples of the present disclosure are summarized. Examples may enable an SMF or UPF to send User Plane information associated to a given PDU session to a UDM. User Plane information may be characterized (User Plane characteristics) by any of the following information:
a. IP flow/filter information (related to the GTP-U flow, i.e. the "outer" flow), not the payload containing UE UP packets), e.g. 4-tuple, 5-tuple GTP-U endpoint information, IP source and/or destination address or range (e.g. in IP range, subnet), protocol type, IP version,
b. Header information, especially information included in or equivalent to GTP-U header extensions, e.g. TEID, 5QI, QoS flow information, PDU session ID.
c. Indication whether UP is roaming-related (e.g. home-routed), and
d. Serving PLMN (indirectly indicates whether the PDU session is roaming-related).

A UP firewall may receive some or all of the User Plane information from the UDM related to a given PDU session associated to:
a. A query related to one or more data packets after the UP firewall has received the one or more data packets, or
b. a subscription to receiving User Plane information matching one or more User Plane information characteristics or user characteristics.

The UP firewall may use the received User Plane information to any of:
a. filter UP traffic, especially to derive firewall rules from the received User Plane information,
b. query another network element, especially SMF or UPF, for additional User Plane information to be used by the UP firewall, and
c. send the received information or information derived from it, especially a firewall rule, to other firewalls.

Examples may use a subscription or a query being containing or being related to firewall parameters, such as:
a. firewall identifier,
b. IP flow/filter information,
c. Header information,
d. Serving PLMN.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for providing firewall services in a mobile communication system, the method comprising
storing (11) user plane information about a user plane data flow of a data service in the mobile communication system; and
providing (12) the information about the user plane data flow to a firewall entity to enable firewall services to be applied to the user plane of the mobile communication system.

2. The method (10) of claim 1, wherein the user plane information comprises one or more elements of the group of Internet Protocol, IP, flow and/or filter information, header information, an indication whether the user plane data flow is roaming-related, a serving Public Land Mobile Network, PLMN, and/or a Packet Data Unit, PDU, session Identification, ID.

3. The method (10) of one of the claims 1 or 2, wherein the user plane data flow comprises a user plane data session, especially a packet data unit session.

4. The method (10) of one of the claims 1 to 3, wherein the storing (11) comprises storing the user plane information at a data repository, especially a Unified Data Management, UDM, entity in the mobile communication system.

5. The method (10) of claim 4, being configured to be performed at the data repository, especially the UDM, entity and wherein the providing comprises sending the user plane information to the firewall entity after reception of a query request from the firewall entity and/or based on a subscription of the firewall entity to being informed about user plane data flows with one or more predefined user plane characteristics.

6. The method (10) of one of the claims 1 to 4, being configured to be performed at the firewall entity, and wherein the providing (12) comprises receiving the user plane information at the firewall entity.

7. The method (10) of claim 6, further comprising receiving a user plane data packet at the firewall entity and querying for the information related to the user plane based on the user plane data packet.

8. The method (10) of one of the claims 6 or 7, further comprising receiving the user plane information at the firewall entity based on a subscription to receiving user plane information matching one or more predefined user plane characteristics.

9. The method (10) of one of the claims 7 or 8, wherein the subscription or query relates to one or more firewall parameters of the group of a firewall identifier, IP flow/filter information, header information, and/or serving PLMN information.

10. The method (10) of one of the claims 6 to 9, further comprising terminating the user plane data flow after a predefined time of inactivity.

11. The method (10) of one of the claims 6 to 10, further comprising using the user plane information for one or more elements of the group of monitoring the user traffic, filtering the user traffic, deriving firewall rules, querying another network element, especially a session management function, SMF, or a user plane function, UPF, for additional user plane information to be used by the firewall entity, and/or sending the received user plane information or information derived from it, especially a firewall rule, to other firewall entities.

12. The method (10) of one of the claims 1 to 4, being configured to be performed at a SMF and/or UPF of the mobile communication system, wherein the providing (12) of the user plane information comprises registering the user plane information at another network entity.

13. A computer program having a program code for performing one of the methods (10) of one of the claims 1 to 11, when the computer program is executed on a computer, a processor, or a programmable hardware component.

14. An apparatus (20) for a mobile communication system, the apparatus (20) comprising
one or more interfaces (22) configured to communicate in the telecommunication system; and
one or more processing devices (24) configured to perform one of the methods (10) of one of the claims 1 to 12.

15. The apparatus (20) of claim 14 being comprised in a mobile communication system, especially in a firewall entity, a UDM entity, a SMF and/or an UPF of the mobile communication system.

## Amended claims

### Amended claims in accordance with Rule 137(2) EPC.

1. A method (10) for providing firewall services in a mobile communication system, the method comprising
storing (11) user plane information about a user plane data flow of a data service in the mobile communication system, wherein the storing (11) comprises storing the user plane information at a data repository, especially a Unified Data Management, UDM, entity in the mobile communication system; and
providing (12) the information about the user plane data flow to a firewall entity to enable firewall services to be applied to the user plane of the mobile communication system, wherein the providing (12) comprises sending the user plane information to the firewall entity after reception of a query request from the firewall entity and/or based on a subscription of the firewall entity to being informed about user plane data flows with one or more predefined user plane characteristics.

2. The method (10) of claim 1, wherein the user plane information comprises one or more elements of the group of Internet Protocol, IP, flow and/or filter information, header information, an indication whether the user plane data flow is roaming-related, a serving Public Land Mobile Network, PLMN, and/or a Packet Data Unit, PDU, session Identification, ID.

3. The method (10) of one of the claims 1 or 2, wherein the user plane data flow comprises a user plane data session, especially a packet data unit session.

4. The method (10) of one of the claims 1 to 3, being configured to be performed at the data repository, especially the UDM, entity.

5. The method (10) of one of the claims 1 to 3, being configured to be performed at the firewall entity, and wherein the providing (12) comprises receiving the user plane information at the firewall entity.

6. The method (10) of claim 5, further comprising receiving a user plane data packet at the firewall entity and querying for the information related to the user plane based on the user plane data packet.

7. The method (10) of one of the claims 5 or 6, further comprising receiving the user plane information at the firewall entity based on a subscription to receiving user plane information matching one or more predefined user plane characteristics.

8. The method (10) of one of the claims 6 or 7, wherein the subscription or query relates to one or more firewall parameters of the group of a firewall identifier, IP flow/filter information, header information, and/or serving PLMN information.

9. The method (10) of one of the claims 5 to 8, further comprising terminating the user plane data flow after a predefined time of inactivity.

10. The method (10) of one of the claims 5 to 9, further comprising using the user plane information for one or more elements of the group of monitoring the user traffic, filtering the user traffic, deriving firewall rules, querying another network element, especially a session management function, SMF, or a user plane function, UPF, for additional user plane information to be used by the firewall entity, and/or sending the received user plane information or information derived from it, especially a firewall rule, to other firewall entities.

11. The method (10) of one of the claims 1 to 4, being configured to be performed at a SMF and/or UPF of the mobile communication system, wherein the providing (12) of the user plane information comprises registering the user plane information at another network entity.

12. A computer program having a program code for performing one of the methods (10) of one of the claims 1 to 10, when the computer program is executed on a computer, a processor, or a programmable hardware component.

13. An apparatus (20) for a mobile communication system, the apparatus (20) comprising one or more interfaces (22) configured to communicate in the telecommunication system; and one or more processing devices (24) configured to perform one of the methods (10) of one of the claims 1 to 11.

14. The apparatus (20) of claim 13 being comprised in a mobile communication system, especially in a firewall entity, a UDM entity, a SMF and/or an UPF of the mobile communication system.
